# EUROPEAN PATENT APPLICATION

(11) **EP 4 517 312 A1**
(43) Date of publication of application: **05.03.2025**
(21) Application number: 23275128.9
(22) Date of filing: 29.08.2023
(51) Int. Cl.: G01N 23/203, G01V 5/00

(54) **APPARATUS AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

An apparatus comprising: an emitter configured to emit X-ray radiation incident upon a target; a detector configured to detect backscattered radiation from the target; and a computer, comprising a processor and a memory, communicatively coupled to the detector, wherein the computer is configured to classify a composition of the target based on the detected backscattered radiation.

## Description

### FIELD

The present invention relates to an apparatus for, and a method of, classifying a composition of a target based on detected backscattered radiation. The present invention finds application in distinguishing explosive materials from non-explosive materials, for example, and/or may be used for the identification of other materials such as drugs, contraband such as precious metals, weapons, etc.

### BACKGROUND

Various materials, such as explosives, illegal drugs, contraband such as metals, weapons and other materials, may be concealed for various reasons. The proliferation of portable electrical devices for example represents an opportunity for terrorists to smuggle explosive devices therein.

It is known to use for example X-rays, metal detectors and millimetre wave devices to interrogate people and objects, such as luggage. However, the known techniques suffer from various drawbacks and generally can provide only crude results.

Existing solutions fall generally into three categories:
1. Security screening situations in which known solutions are unable to detect and distinguish drugs and explosives from other materials, and are primarily concerned with the detection of weapons. For example, a terrorist might in advance of a VIP event plant an hidden explosive charge in the walls, floors, ceiling or approach routes to the venue;
2. Solutions developed specifically to detect and recognise drugs and explosives. These generally require there to be trace quantities of the explosive in direct contact with the sensor. They are unable to detect and recognise hermetically, or well-sealed, materials;
3. Multi-energy X-ray transmission imaging systems that can crudely classify the contents into crude categories, such as metals and organic materials, based on X-ray transmission imaging, in which an imaging plate is placed behind the target, which is illuminated from the other side by the X-ray source.

A known materials classifier for use in detecting the presence of at least one material or material type in a sample or object under test comprises:
a gamma radiation source holder for holding two or more gamma radiation sources for irradiating a sample test location;
a detector for detecting radiation events in a backscatter direction from the test location, the events lying in at least three different detected energy bands; and
a classifying analyser for analyzing two or more relationships between detected radiation events in the at least three different detected energy bands, the analysis being carried out for at least two different materials or material types, the classifying analyser being configured to select a preferred relationship for distinguishing between the at least two different materials or material types.

### SUMMARY

According to a first aspect of the present invention, there is provided an apparatus comprising:
an emitter configured to emit X-ray radiation incident upon a target;
a detector configured to detect backscattered radiation from the target; and
a computer, comprising a processor and a memory, communicatively coupled to the detector, wherein the computer is configured to classify a composition of the target based on the detected backscattered radiation.

The known materials classifier, comprising the gamma radiation source holder for holding two or more gamma radiation sources for irradiating a sample test location, has been validated experimentally, showing it to be an effective method for the detection and classification of explosives that have been concealed within electrical items (such as laptops, mobile phones). The use of the gamma radiations sources in the known materials classifier does, however, place significant constraints on the form thereof, making handheld, or portable devices impractical and potentially unsafe, because this known materials classifier cannot be switched off. The use of the gamma radiations sources similarly places requirements for regular maintenance and disposal of the gamma source material.

Another constraint of the known materials classifier is that the strength of the emitted gamma photon energies is determined by the gamma source material. This is therefore fixed at the point of manufacture and cannot be controlled, or tuned, in operation. Further, some of the preferred gamma source materials have impractically short half-lives, making regular maintenance and replacement a requirement. Furthermore, the number of available gamma ray emission lines may be relatively limited. For example, the AM-241 and Ba-133 sources used in a source array only really emits ~4 useful lines of adequate intensity.

In contrast, the apparatus according to the first aspect of the present invention replaces the gamma radiation sources used in the known materials classifier with an emitter configured to emit X-ray radiation incident upon a target (i.e. an x-ray generator). This emitter will only generate X-ray radiation when powered and initiated, for example by the operator, and may only do so for short bursts, as required by the detector. Additionally, the intensity and/or energy of the emitted X-ray radiation may be more finely controlled, which makes characterisation of materials concealed in different objects a more practical option. For example, the requirements for targets concealed behind thin and/or relatively lower density materials (e.g. plasterboard) would be considerably different from targets concealed behind a thicker and/or relatively more dense material, such as concealed in a car engine. A problem is that the attenuation of the backscattered X-rays as they re-emerge from the thicker and/or relatively more dense material concealing the target may be too high at lower backscatter X-ray photon energies.

For these reasons, the apparatus comprising the emitter configured to emit X-ray radiation is considerably more practicable and lowers the safety hazard requirements for the apparatus according to the first aspect, compared with the known materials classifier comprising the gamma radiation sources.

The apparatus according to the first aspect has application in detecting explosives concealed within portable electrical devices, for example. It therefore has practical application in solutions for airport security, and similar, where existing technologies fall short. The apparatus according to the first aspect should be equally able to detect explosives concealed in soil, or behind walls, for example. This would make the apparatus according to the first aspect applicable for mine and IED detection, and potentially handheld variants of the technology viable. In contrast, traditional metal detector solutions generally do not detect the explosive charge. In some territories, Afghanistan in the past for example, the IEDs contain very little metal components so it is a challenge to detect the IEDs using a metal detector.

In more detail, the apparatus according to the first aspect circumvents some of the issues of the known materials classifier by exploiting high energy photons that can be generated from x-ray sources. The advantage this provides is that, at least in its 'off' state, the apparatus is benign and safe to handle. The nature of the solution is such that the x-rays can be generated only as required, and under full control of the operator. This makes for more practicable implementations of the solution, including handheld variants, as well as compact mobile systems, in addition to larger implementations. This practicability further opens opportunities for exploitation of this generalised approach into adjacent markets. For example, it is being advanced by CTIO for exploitation in adjacent markets, which may include by way of example mobile security screening, border force applications, military mine and lED detection, security sweeping of high value areas, underwater mine detection and clearance.

In addition to the detection of explosives, the apparatus according to the first aspect may be used to detect and classify other materials, for example in detecting precious metals or nuclear materials, which may have application in border force detection of smuggled materials. Nuclear materials would in many cases be detected by detecting their gamma/X-ray emissions from the nuclear decay process provided these emissions photon energy wise are sufficiently energetic to penetrate what every conceals them. For precious metals, the detection approach would be different from spectral analysis of the Compton backscatter. Each metal, when illuminated with sufficiently hard X-rays, will emit characteristic X-rays. Each precious metal will emit its own characteristic X-rays, and energy of those X-rays progressively increases as the atomic number Z of the atom increases. For example, 68.8 keV, 66.99 keV and 77.98 KeV emission lines of gold relate to the filling of a vacancy in the inner 1s orbitals of the K-shell with a higher shell electron. Lighter elements may prove to detect because the characteristic K-shell transition may be too low in photon energy to be detected because they are absorbed by the material hiding the metals. It may thus prove possible to classify precious metals on the basis of their Compton Backscatter spectrum.

Advantageously, the apparatus according to the first aspect:
- Does not contain radioactive materials.
- Has an emitter that can be initiated by the operator.
- Has an emitter whose energy and/or intensity can be controlled by the operator and/or the computer. This limits the X-ray radiation emitted to only the amount necessary. Additionally and/or alternatively, it may further enable the apparatus to be used against a far wider range of target types such that the intensity may be selectively controlled to optimize the returned signal to within a range that maximized the ability to classify the target. For example, if you are looking for anti-personnel land-mines, these will generally be located close to the air-soil interface and will not be deeply buried (excessive soil covering muffles the explosive threat). So, interrogating the soil surface with lower energy X-rays will reduce the signal return from deeper soil levels which might drown out the signal from the explosive itself. It is an operational decision to decide how deep one wants to probe into the soil in the search for explosives.

In one example, the apparatus is a materials classifier as described with respect to the materials classifier in WO 2021/032951 A1 mutatis mutandis (i.e. having an emitter configured to emit X-ray radiation c.f. a gamma radiation source). It should be understood that the apparatus according to the first aspect does not comprise a gamma radiation source.

It should be understood that the apparatus according to the first aspect classifies the composition of the target based on the detected backscattered radiation. In contrast, a known multi-energy X-ray transmission imaging system classifies the composition of the target based on the detected transmitted radiation. It should be understood that the emitter and the detector of the apparatus according to the first aspect are disposed on the same side of the target. In contrast, the emitter and the detector of a known multi-energy X-ray transmission imaging system are disposed on mutually opposite sides of the target.

### Emitter

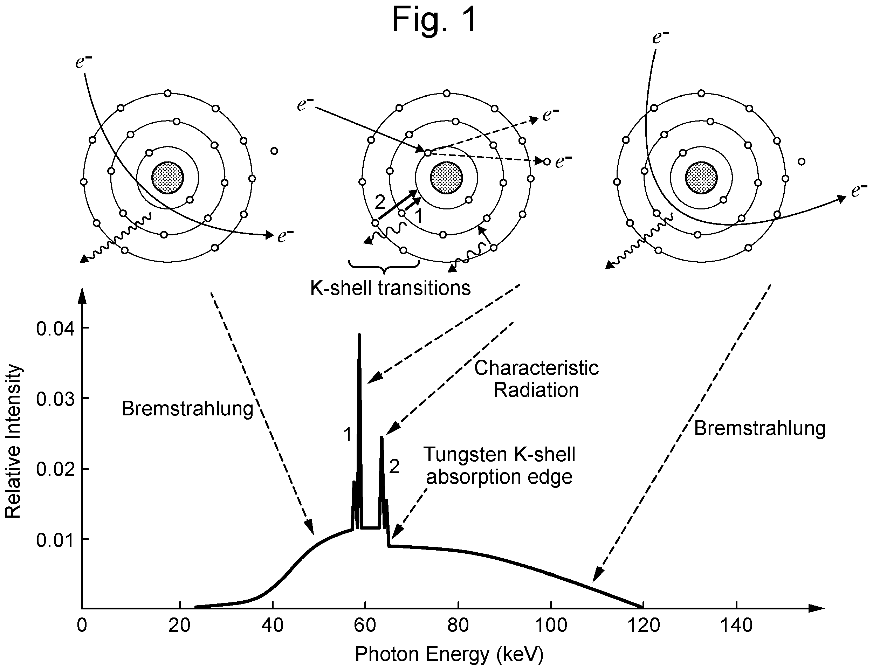

The apparatus according to the first aspect comprises the emitter configured to emit X-ray radiation incident upon the target. Emitters configured to emit X-ray radiation are known, for example X-ray tubes. Typically, an X-ray tube generates electrons and accelerates these electrons towards a metal, typically copper, molybdenum, or tungsten, for example. On striking the metal, the electrons either excite the metal atoms of the target to an ionised state by ejecting a deep inner shell electron (for example a 1s electron) which leads to the generation of narrow emission linewidth characteristic X-ray photons produced by the vacancy then being filled by a higher shell electron, or the electrons are deflected by the positively charged nuclei of the metal atoms, giving rise to broad spectrum Bremsstrahlung radiation. The subsequent aggregate X-ray radiation contains a spectrum of X-ray photons having a range of X-ray photon energies (such as, for example, shown in Figure 1, which shows a typical spectrum of X-ray emission for Tungsten).

The apparatus directs these X-ray photons (i.e. the emitted X-ray radiation), typically via an aperture for example, via a low X-ray absorbing window in an X-ray tube (for example beryllium) that creates a 'stop' to allow only a cone of X-rays to emerge towards the target, created in an X-ray blocking material (i.e. a housing). The X-ray photons striking the target (typically a button or annular ring of the metal on a copper anode heat sink that is actively cooled for more powerful X-ray tubes) will either interact directly with the surface material of the target, or penetrate through the surface material before interacting with an interior material. Some X-rays may indeed continue through the target unimpeded, although these are not of interest to this invention. The X-rays interacting with the target will undergo primarily one of three forms of interaction: photo-ionisation, Rayleigh scattering, or Compton scattering. The interaction of interest to this invention is Compton scattering. Compton scattering is an inelastic scattering mechanism, whereby the scattered photon ejected from the atom by the interaction may have a different energy from the incident photon. The change in energy is characteristic of the angle of the deflection of the scattered photon. The probability of the occurrence of Compton scattering is a property of the atom, and therefore the intensity of the spectral response at any given energy is determined by the composition of the target. This may be affected by the composite atoms themselves, as well as the interaction of those atoms with surrounding atoms, for example through molecular bonds and inter-molecular effects. Typically, the majority of the Compton scattering events involve the outermost valence electrons of the atoms. So, in a molecular material, the Compton scattering is partly a property of the inter-atomic molecular bonds. If it did not, then one would not expect a significant Compton Backscatter spectrum difference between benign strongly bonded materials and weakly bonded explosive compounds.

If the target is composed of a compound or mixture of elements, the Compton scattered emission will have spectral properties that are characteristic of the compound or mixture of elements of the material. This is the feature of the apparatus that enables the composition of the target to be classified.

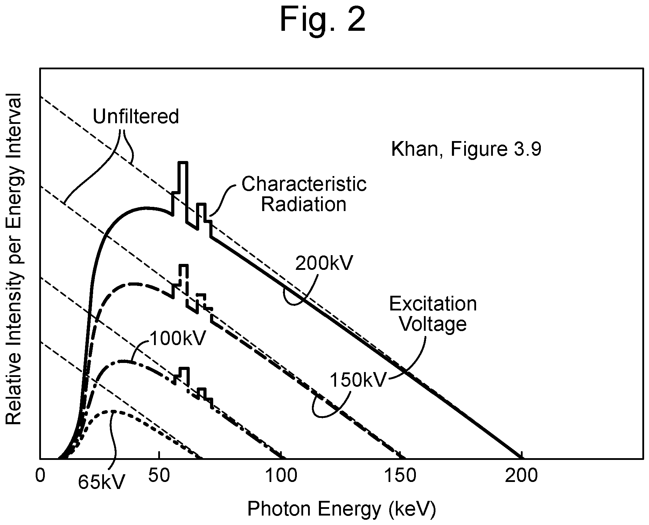

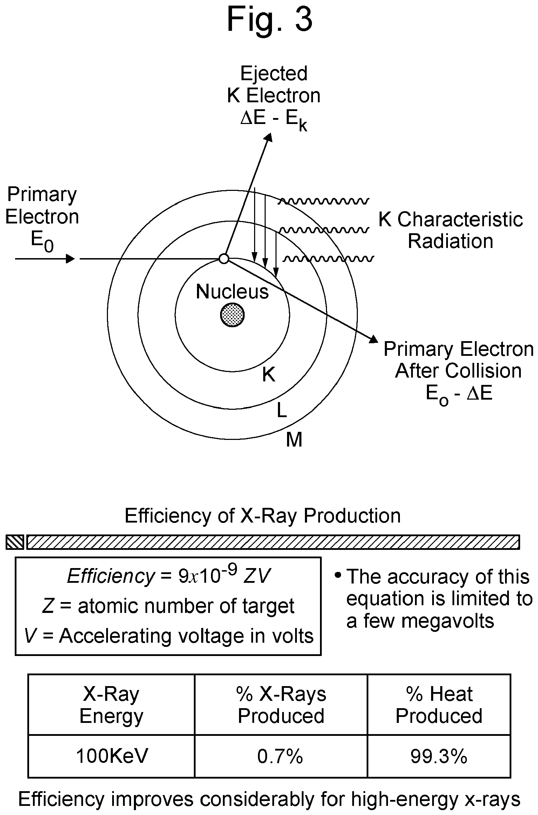

A characteristic of Compton scattering is that the difference in energy between the incident photon and scattered photon is a function of the angle of scattering such that photons scattered directly back towards the source of the incident radiation exhibit the largest energy difference. Additionally, the rate of change in energy difference decreases with increasing scattering angle. These two effects mean that the most efficient detection solution is to operate with a high backscatter angle geometry, i.e. one where the detector is close to the emitter. This leads to the smallest variation in the energy shift of the detected Compton backscatter X-ray photons for X-rays absorbed by a detector of significantly large solid angle of interception. Also, since the X-rays may arise from interactions from different depths in the target, the maximum possible backscattering angle will reduce the variation of backscatter angle arising from variation in the depth from which the X-ray detected by the detector was scattered. See Figures 2 to 4.

In one example, the emitter is configured to emit substantially and/or primarily Bremsstrahlung radiation. Generally, the X-ray spectrum in terms of total energy is dominated by Bremsstrahlung. However characteristic radiation is much more intense in terms of its spectral intensity per keV. However by choosing a sufficiently low atomic number target, say Z= 63 (europium) or smaller, the backscatter X-ray energy due to any significant intensity characteristic radiation will lie below ~40 KeV. But of course not all elements are suitable as an anode target, either because they are gases, or because they melt at too low a temperature to name but two possible issues. This is characteristically broad spectrum radiation and illuminates the target over a wide range of photon energies.

In one example, the emitter is configurable to emit characteristic radiation. In other words, the emitter uses one or more metals in order to generate strong spectral features, known as characteristic radiation. These are narrow and intense spectral features in comparison to Bremsstrahlung. This may allow selective characterization of the spectrum in a way that enhances the ability of the apparatus to classify the target. These metals may be fixed as part of the design of the apparatus, or alternatively the design may be such that the metal is selectable by the operator, or by the computer. The one limitation of this technique is that energy range accessible to significantly intense characteristic radiation is limited to values below 111 keV which corresponds to the Kbeta X-ray emission line of Uranium, the densest practical element that could be used as an X-ray tube anode target. Also, the energy of characteristic radiation for a given type of atomic transition to the 1s inner-most electron orbital fall in value monotonically as the atomic number of the atom decreases. See https://www.horiba.com/fileadmin/uploads/Scientific/Documents/XRay/emission _lines.pdf. There is considerable benefit in illuminating the target with a X-ray continuum as the backscattered spectrum would likewise form a continuum and it is likely that certain bands within this backscattered continue are better at supporting better classification than other wavebands. Multiple characteristic lines can for example be obtained by placing different target button pie slices so that the electron beam hits 2 or more materials each emitting its own characteristic X-rays; this would apply for a static anode. Or alternatively on an X-ray with a rotating anode configuration, inserts of different metal anodes could for example be placed either side by side on a common radius from the spindle axis of anode. Each metal anode would emit its own characteristic radiation in addition to Bremsstrahlung as it gets irradiated by the electron beam.

In one example, the emitter comprises a filter configured to limit an energy spectrum of the of the emitted X-ray radiation. In this way, the filter is used to control the energy spectrum of the emitted X-ray radiation. This may be used to selectively remove, reduce or attenuate a part of the spectrum, for example because this part of the spectrum is not of interest. See http://web-docs.gsi.de/-stoe_exp/web_programs/x_ray_absorption/index.php. If this filter is time varying, for example by using a wheel comprising a varying or multitude of filters, then it is possible to selectively modulate only a part of the energy spectrum. This may again be used in concert with a synchronously locked detector in order to selectively interrogate the spectrum, providing better discrimination against noise or background radiation.

In one example, the emitter comprises and/or is an X-ray tube, for example as described herein. In one example, the emitter comprises and/or is a synchrotron, for example a 'table top' synchrotron, such as described in https://analyticalscience.wiley.com/do/10.1002/sepspec.24424ezine. In one example, the synchrotron is configured to control the energy and/or intensity of the emitted X-ray radiation. For example, the synchrotron may enable the beam to have its X-ray energy rapidly changed to allow the target to be scanned with a range of X-rays, such as by ramping the magnetic field in the synchrotron as the required X-ray energy is increased - the higher the electron energy, the bigger the magnetic field.

In one example, the emitter is configured to emit X-ray radiation having an energy in a range from 60 keV to 400 keV, preferably in a range from 100 keV to 300 keV.

http://web-docs.gsi.de/~stoe_exp/web_programs/x_ray_absorption/index.php provides an on-line calculator for calculating the Attenuation, Transmission, Energy Absorption (for Lead only), and the interaction probabilities for different X-ray interactions with matter, namely Photo-ionisation, Compton Scattering, Rayleigh Scattering, etc. The pair production processes for the energies of interest may be ignored.

### Notes:

1. It is assumed that all of the interaction probabilities refer to the probability of what the X-rays first interaction with the target material is. It does not calculate the probability of subsequent X-ray-matter interaction processes by the X-rays that first experienced Rayleigh or Compton scattering. This means it can significantly underestimate the real probability of attenuation due to Photo-ionisation when Rayleigh scattering and Compton scattering are themselves significant interaction effects.
2. It is assumed that the attenuation value in the calculator is the sum of all the possible first event interaction processes: Photo-ionisation (aka Photo-absorption), Compton Scattering, Rayleigh Scattering. Subsequent X-ray interactions in the target are not counted, so the attenuation loss is generally a minimum value in practical terms, but this effect will only be significant where Rayleigh scattering or Compton scattering are themselves significant percentages.

Specifically, the real probability of attenuation due to Photo-ionisation can be better estimated if one makes the reasonable approximation of: subtract the lossless predominately forward scattering Rayleigh scattering probability from the attenuation probability; or as a less reasonable approximation of: subtract the energy lossy Compton scattering probability as well.

The actual X-ray transmission through the barrier material will therefore always exceed the calculated transmission figure because the transmission figure does not include the Rayleigh scattered X-rays, nor the forward scattered Compton scattered X-rays.

Note: Rayleigh scattering is a lossless process for the X-rays and the outgoing Rayleigh scattered X-ray is predominately emerging in a forward direction. So, it is not really an attenuation mechanism from the perspective of what actually passes through the barrier material.

### Example calculations using the on-line calculator

Take the specific case of Tungsten (W) foils of thickness 0.1 mm and 0.2 mm thick.
X-rays of energy 225 keV

The calculator yields for 0.1 mm thick foil the effect on incident 225 keV X-rays of:
Attenuation = 11.0223%
Transmission = 88.9777% [But remember that Rayleigh scattered X-rays would add to this transmission figure]

Consisting of:
Photo-absorption = 8.6004%
Compton scattering = 1.6373%
Rayleigh scattering = 0.7846%

The calculator yields for 0.2 mm thick foil the effect on incident 225 keV X-rays of:
Attenuation = 20.8297%
Transmission = 79.1703%

Consisting of:
Photo-absorption = 16.2528%
Compton scattering = 3.0941 %
Rayleigh Scattering = 1.4828%

Meanwhile for X-rays of energy 100 keV, the calculator yields for 0.1 mm thick foil the effect on incident 100 keV X-rays of:
Attenuation = 57.4343%
Transmission = 42.5657% [But remember that Rayleigh scattered X-rays would add to this transmission figure]

Consisting of:
Photo-absorption = 53.746%
Compton scattering = 1.3205%
Rayleigh scattering = 2.3497%

The calculator yields for 0.2 mm thick foil the effect on incident 100 keV X-rays of:
Attenuation = 81.8817%
Transmission = 18.1183%

Consisting of:
Photo-absorption = 76.6493%
Compton scattering = 1.8825%
Rayleigh Scattering = 3.3498%

So, use of a tungsten foil filter is beneficial as it can significantly harden the X-ray Bremsstrahlung spectrum. It does so by significantly reducing its humped spectral intensity distribution at lower photon energies which are less likely to yield Compton backscattered photons from the explosive charge with sufficient energy to then pass though the barrier between the explosive charge and the X-ray detection system. Tungsten as a high atomic number material also has the benefit of not generating as many Compton Scattered X-rays of variable energy; unlike lower atomic number materials.

Using this calculator, the inventors have established that 92% of the X-ray energy at 225 keV would be absorbed by a 5 mm thick plate. Meanwhile a 10 mm thick plate would absorb 99.42% of the X-ray energy at 225 keV, with only about 0.0165% actually passing through the 10mm thick lead plate. A 5 mm thick plate would stop all but 0.532% of the X-ray photons of 160 keV energy - for the apparatus according to the first aspect, interest is principally in X-rays of energies below 160 keV for the backscattered Compton X-rays. So, we want to protect the detector as much from breakthrough X-ray signals at 160 keV and below. Breakthrough from the source to the detector at higher energies is of lesser importance, except of course to the nearby operator.

By suppressing lower energy X-ray photons, such as by using foils, also offers significantly health advantages as these are more likely to be absorbed by the human body. Also reducing the intensity of the less useful low energy X-rays will prevent detector overload where the number of received X-ray detection events exceeds its ability to count these events.

If you run the calculator using Tissue-Soft as the target material, the calculator suggests that a 200mm thick Tissue-Soft sample will absorb 89.24% of the incident radiation. And the 'transmission' is calculated as 10.7503%. This looks bad, however most of the interaction probability relates to Compton scattering (88.92%). Now forward scattered X-rays will suffer comparatively little energy loss, and the bulk of Compton scattered X-rays will be in the forward direction. So many of the incident X-rays will emerge with only modest drops in their final exit energy (this is weighted random walk calculation). The photo-ionisation probability is just 0.0325 keV, which is tiny. Rayleigh scattering is also small with a probability of 0.2894%.

The corresponding numbers for 40 keV X-rays is:
Attenuation 99.66% and transmission 0.03351 %. Now the probability of photo-ionisation is 22.1206%, Compton Scattering 67.1848%, and Rayleigh scattering 10.3595%. Worse subsequent interactions will yield more Photo-ionisation losses.

However, the total energy released by Photo-absorption process must take into account the energy of the initial X-ray photon. However, 0.0325 x 400 = 13 << 22.1206 x 40 = 884.

So, it is clearly beneficial to prevent the un-useful lower energy X-rays from emerging from the system using appropriate filters.

In one example, the computer is configured to vary the voltage output of the emitter, for example depending on a use case scenario. For example, in the use case scenario of a concealed IED, the incident X-ray radiation needs to be sufficiently energetic that the subsequent Compton scattered X-rays are sufficiently energetic to be able to pass without too much loss through the concealing barrier material over the explosive charge, but not so energetic that a large signature from any large volume of material behind the lED is detected, such that this signature starts to swamp the signature from the explosive charge itself. In so far as is possible, one also wants to avoid multiple Compton Scattering events that give rise to progressive falls in the energy of the repeatedly Compton scattered X-ray if the emerging X-ray is significantly deflected.

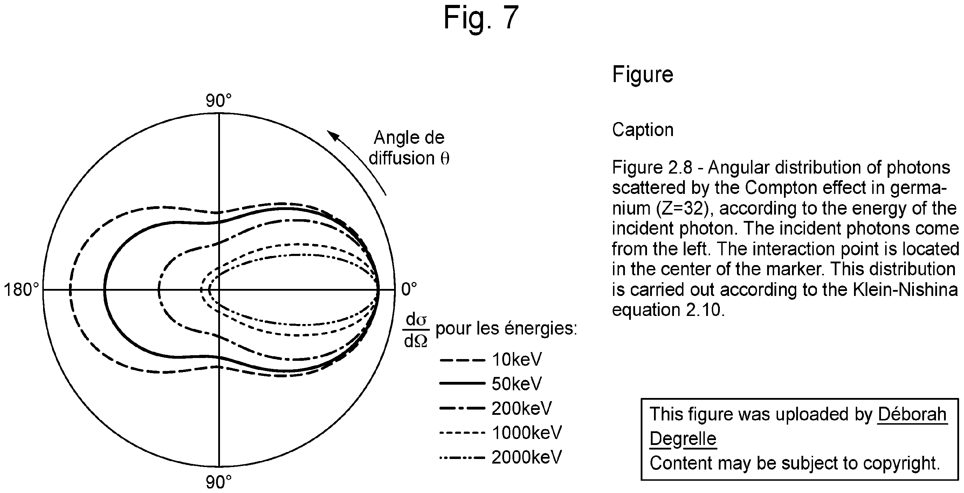

Compton scattering becomes progressively more and more forward biased as the energy of the incident X-rays increase, as shown in Figure 7. Hence, the probability of Compton scattering becomes lower for higher energies combined with less backscatter X-rays as well, and separately the X-ray tube generates less hard X-rays at higher energies; hence another reason to use filters to energy wise harden the Bremsstrahlung spectrum.

In one example, the emitter is configured to emit X-ray radiation responsive to initiation thereof by an operator, for example via an actuator, such as a physical actuator or a software actuator e.g. a GUI button. In this way, the apparatus is configured such that the source emission is initiated by the operator, thereby improving safety.

### Detector

The apparatus according to the first aspect comprises the detector configured to detect backscattered radiation from the target, for example as a function of X-ray photon energy e.g. a photon energy versus number of counts for that energy histogram, including the energy of the detected X-rays in addition to the number of X-ray photons of that energy. In other words, the detector is able to determine the photon intensities and/or energies of the photons scattered by the target (i.e. by the atoms thereof). In one example, the detector comprises and/or is a spectroscopic detector, such as a scintillator detector. Spectroscopic detectors, such as scintillator detectors, are known.

For example, a scintillator detector may output an array whereby the elements thereof correspond to bins of an energy spectrum representing the scattered photons. This energy spectrum can be interrogated by an algorithm, such as that described herein, which selects two or more sections of the spectrum to characterise a feature set that is descriptive of the target. Comparison of the feature sets with known feature sets of types of materials, for example, enables the composition of the target to be classified.

In one example, the detector is configured to detect backscattered Compton radiation, for example as described herein.

In one example, the detector is configured to detect an intensity and/or an energy of the backscattered radiation, for example as described herein. In this way, an energy spectrum of the backscattered radiation may be provided.

In one example, the detector and the emitter are quasi-collocated or collocated, for example mutually adjacent or closely-spaced. A characteristic of Compton scattering is that the difference in energy between the incident photon and scattered photon is a function of the angle of scattering such that photons scattered directly back towards the source of the incident radiation exhibit the largest energy difference. Additionally, the change in energy difference (with incremental changes in the backscatter angle due to say detector aperture geometry) decreases with increasing scattering angle.

These two effects mean that the most efficient detection solution is to operate with a high backscatter angle geometry, i.e. one where the detector is close to the emitter. The more efficient method is to collocate the detector alongside the emitter. It results in the lowest dispersion in backscatter energy for a fractional change in backscatter angle. It also results in the largest difference in photon energy between the incident and scattered photons. In this way, the detector is able to detect the x-rays scattered from the target material, again potentially after transmitting a container material. In this way, the detector is able to detect the energy or energies of the scattered x-ray photons.

In one example, the detector and the emitter are disposed in a variably-spaced relationship. In this way, the backscatter angle geometry may be varied, for example to maintain a constant and/or predetermined backscatter angle independent of a range of the target, for example for comparison of energy spectra for the same backscatter angle. In one example, the detector and the emitter are disposed in a fixed-spaced relationship. In this way, the construction of the apparatus may be relatively less complex.

In one example, the detector is configured to detect backscattered radiation, having an energy in a range from 10 keV to 180 keV, preferably in a range from 40 keV to 160 keV. Relatively lower energy X-rays are strongly attenuated by most materials. For example, 1 mm thick aluminium layer will experience a calculated attenuation of 99.9% and a transmission of 0.0849%. Most of the calculated absorption takes the form of 97.41% photo-ionisation, and only 0.4034 % Compton Scattering and 2.0967% Rayleigh scattering. So, an explosive charge behind any significant material barrier will give virtually no detected backscatter spectral signature below about 10keV. The limit of 40 keV captures the 150 degree backscattered X-rays at ~48.8 keV due to the tungsten characteristic X-rays emitted at 59.32 keV. The sensible upper limit of 160 keV on the range is determined by the available incident X-ray photon energy. 370 kV portable X-ray generators exist, and this would yield backscatter X-rays at a deflection angle of 150° of nominally 157 keV. Reportedly up to 600 kV X-ray tubes exist although it is not known by me if they exist in a portable X-ray system form. A backscattered X-ray from a 600 keV X-ray tube would at a deflection angle of 150 degrees emerge with an energy of 188 keV. For a 180° degree scattering the same X-ray would yield a backscattered X-ray of 179 keV.

In one example, the detector is configured to detect backscattered radiation events, the events lying in at least three different detected energy bands.

In one example, the detector is as described in WO 2021/032951 A1 mutatis mutandis. In one example, the detector is as described in EP 3528012 which describes a radiation backscatter detector having a tessellated array of scintillator detectors. EP 19154080.6 describes a calibration technique for a scintillator detector.

### Computer

The apparatus according to the first aspect comprises the computer, comprising the processor and the memory, communicatively coupled to the detector, wherein the computer is configured to classify a composition of the target based on the detected backscattered radiation.

In one example, the computer is communicatively coupled to the emitter and the computer is configured to control an intensity and/or an energy of the emitted X-ray radiation. The X-ray intensity for a given spectral distribution of the Bremsstrahlung and tube voltage is controlled by varying the electron current between the electron emitting cathode and the anode target. Increasing the X-ray tube accelerator voltage will increase the intensity also, but the spectral range of X-ray range will increase also as illustrated in Figure 2. In this way, the intensity and/or energy may be reduced to zero, for example, when the apparatus is not in use. In this way, the intensity and/or energy may be controlled to desired levels, for example, only when the apparatus is in use. In this way, a variable intensity and/or energy emitter is provided.

In one example, the computer is communicatively coupled to the emitter and the computer is configured to ramp an intensity and/or an energy of the emitted X-ray radiation. Ramping up the accelerator voltage between the electron emitting cathode and the anode target where the electrons hit the anode means that X-ray emission becomes more intense at all X-ray photon energies previously emitted. In addition higher energy X-rays, not previously emitted due to insufficient accelerator voltage, now start to be emitted. In this way, the intensity and/or the energy of the emitted X-ray radiation may be ramped, for example up and/or down, or scanned, thereby enabling improved classifying of the target by providing backscattered radiation energy spectra as a function of intensity and/or energy of the emitted X-ray radiation. In one example, the computer is configured to ramp an intensity and/or an energy of the emitted X-ray radiation to perform a scan of the target comprising acquiring a series of backscattered radiation energy spectra as a function of intensity and/or energy of the emitted X-ray radiation and classify the composition of the target based on the detected backscattered radiation for the series of backscattered radiation energy spectra as a function of intensity and/or energy of the emitted X-ray radiation. In one example, the computer is configured to ramp an intensity and/or an energy of the emitted X-ray radiation to perform a survey scan of the target comprising acquiring a series of backscattered radiation energy spectra as a function of intensity and/or energy of the emitted X-ray radiation, select an intensity and/or energy of the emitted X-ray radiation from the series of backscattered radiation energy spectra as a function of intensity and/or energy of the emitted X-ray radiation, control the control the intensity and/or the energy of the emitted X-ray radiation to be the selected intensity and/or energy of the emitted X-ray radiation and classify the composition of the target based on the detected backscattered radiation for the selected intensity and/or energy of the emitted X-ray radiation. In this way, the intensity and/or energy of the emitted X-ray radiation may be optimised for the target.

In one example, an intensity and/or an energy of the emitted X-ray radiation source intensity is fixed (i.e. constant, predetermined), at least in use. The intensity and/or the energy of the emitted X-ray radiation may also be controlled by computer and/or the operator, which may allow selection of the intensity and/or the energy of the emitted X-ray radiation depending on the nature of the target being investigated. In one example, the computer is configured to control the intensity and/or the energy of the emitted X-ray radiation using feedback from the detected signal as a means of optimising the detected signal.

In one example, the computer is configured to modulate the intensity and/or the energy of the emitted X-ray radiation. In this way, the emitter may be modulated, for example electrically modulated, in output intensity and/or intensity and the received signal at the detector mixed with the modulating signal as a way to improve the quality of the detected signal. Similar methods are used in electrical signal detection and known as frequency-locked loops (FLLs) and phase-locked loops (PLLs).

In one example, the computer is configured to classify the composition of the target based on the detected backscattered radiation and the modulated intensity and/or energy of the emitted X-ray radiation. In this way, a sensitivity (for example, signal to noise ratio) may be improved.

In one example, the computer is configured to classify the composition of the target based on background-subtracted, detected backscattered radiation. In this way, classification of the composition may be improved.

In one example, the computer is configured to generate an image of the target based on the detected backscattered radiation and/or the classified composition of the target. In this way, the target may be imaged. In one example, the computer is configured to overlay respective images of the target based on the detected backscattered radiation and the classified composition of the target. In this way, identification of the target is improved.

In one example, the computer is configured to classify the composition of the target based on the detected backscattered radiation by selecting two or more sections of the detected backscattered radiation (i.e. detected energy spectrum). This energy spectrum can be interrogated by an algorithm, such as that described herein, which selects two or more sections of the spectrum to characterise a feature set that is descriptive of the target. Comparison of the feature sets with known feature sets of types of materials, for example, enables the composition of the target to be classified.

In one example, the computer is configured to compare (and optionally match) the energy spectrum of the target with the respective energy spectrum of another target area, for example included in a database or library. One can consider an example of how this could work by considering holding the system and directing it towards a wall, with the expectation that behind one part of the wall there is a target of interest. As one moves the system along a wall whilst operating it, the spectrum will change when an object concealed behind one part of the wall gets illuminated by the emitted X-ray radiation. This change in the spectral characteristic may be noted, for example, by an audible alarm.

In one example, the computer is configured to analyse two or more relationships between detected backscattered radiation events in at least three different detected energy bands, the analysis being carried out for at least two different materials or material types, the computer being configured to select a preferred relationship for distinguishing between the at least two different materials or material types.

In one example, the computer is configured to compare values for detected events lying in respective ones of the at least three energy bands. The values may comprise the number of detected events lying in the respective energy bands.

In one example, the computer is configured to provide a multidimensional plotter for plotting relationships between detected events for different materials or material types, in relation to axes which each represent values arising in a respective energy band. In one example, the computer is configured to select a preferred relationship for distinguishing between the at least two different materials or material types. The preferred relationship will usually be a relationship that generates the most distinguishable clusters of results for the different materials or material types.

Embodiments of the invention provide apparatus and a method for extracting multi-spectral data from the spectral response signatures of different materials or material types, and applying the extracted data in improved distinction of two or more materials or material categories by means of their composition.

Notably, the at least three different detected energy bands on which relationships are based are not necessarily mutually exclusive. Thus, two or more of these detected energy bands may show spectral overlap. To support this, the detector may be configured to provide a sorted, or channelized, output to the computer, each sorted category or channel relating to detected energy events in a respective detected energy band, the computer being configured to combine output from more than one category or channel to generate data for plotting a relationship. Where two or more of the detected energy bands on which a relationship is based show spectral overlap, the output from at least one category or channel will be used to generate data for plotting in relation to more than one detected energy band.

An event may comprise a pulse output produced by the detector in response to detected backscattered radiation.

In one example, the computer is as described with respect to the classifying analyser in WO 2021/032951 A1 mutatis mutandis.

### Detected backscattered radiation

In one example, the detected backscattered radiation comprises and/or is a detected backscattered spectrum i.e. comprising a plurality of spectral peaks and distinguished from use of low energy X-ray tubes (e.g. 70 keV) as emitters.

Consider imaging through a door panel of a car which might typically be 1 mm thick steel (thicknesses vary of course). A 1 mm thick plate of iron will absorb 40.45% of the incident X-rays at 70 keV via a photo-ionisation process. A further 8.9% will suffer Compton scattering in various directions. The 180° backscattered X-ray off something say illicit inside the door panel will have a photon energy of ~54.9 keV. This backscattered photon will suffer a photo-ionisation loss in the 1 mm car door of 64.1147% while6.8 % of the backscatter X-rays will suffer Compton scattering. So, attenuation losses in the car door will reduce the Compton backscattered signal by at least 78.7% at 70keV. However, most of the X-rays emitted will be substantially lower than 70 keV and losses therefore much larger still on average.

The available energy levels in the periodic table of elements restricts characteristic radiation emission from an anode metal to photon energies of less than 111.3 keV which itself corresponds to the Kbeta line of Uranium. The photon energy of emitted characteristic radiation falls as the atomic number of the emitter falls. If the lack of shielding effects of whatever covers the explosive charge is small, then instead of just Bremsstrahlung, one could consider using a series of different 'buttons' on a rotating anode to emit a range of different characteristic radiation in turn as the anode rotates quickly.

### Range finder

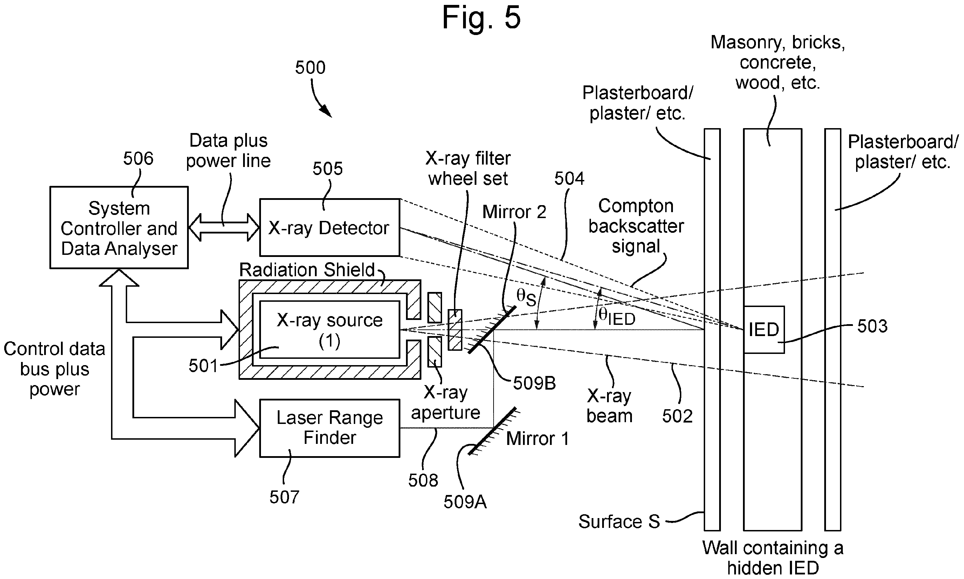

In one example, the apparatus comprises a range finder configured to measure a spacing between the emitter and the target. In this way, the spacing or distance between the emitter and the target may be measured. This may, for example, be achieved using a laser or acoustic rangefinder. The measuring range finder may run in parallel to the x-ray beam, or, using a series of mirrors, run coaxially with the beam, as shown in Figure 5.

By measuring the distance to the target, the following advantages may be provided:
1. The spacing may be used for safety, to only permit the emitter to operate when a target is within a specified range. If no target is present within this range, then the emitter will be controlled, for example by the computer, to not emit X-rays. Alternatively, if the spacing is changing significantly (suggesting possibly a moving target and therefore possibly a biological target), the system may be set to not emit X-rays;
2. The spacing may be used to aid the computation of the angle of backscatter between the emitter and detector. The angle of backscatter enables the calculation of the photon energy difference between the incident X-ray radiation and the backscattered radiation. Understanding this difference may enable the computer to subtract from the received signal the radiation scattered from the closest surface of the target. This may for example be a plasterboard wall, or the outer casing of a suitcase. See Figure 5.

In one example, the computer is communicatively coupled to the range finder and wherein the computer is configured to control an intensity and/or energy of the emitted X-ray radiation based on the measured spacing and/or the computer is configured to classify the composition of the target based on the detected backscattered radiation and the measured spacing.

### Method

According to a second aspect of the present invention, there is provided a method of classifying a composition of a target, the method comprising:
emitting X-ray radiation incident upon the target;
detecting backscattered radiation from the target; and
classifying, using a computer comprising a processor and a memory, the composition of the target based on the detected backscattered radiation.

The emitting, detecting and/or classifying may be as described with respect to the first aspect mutatis mutandis.

### Computer, computer program, non-transient computer-readable storage medium

According to a third aspect of the present invention, there is provided a computer comprising a processor and a memory configured to implement, at least in part, a method according to the second aspect; a computer program comprising instructions which, when executed by a computer comprising a processor and a memory, cause the computer to perform a method, at least in part, according to the second aspect; and/or a non-transient computer-readable storage medium comprising instructions which, when executed by a computer comprising a processor and a memory, cause the computer to perform a method, at least in part, according to the second aspect.

### BRIEF DESCRIPTION OF THE FIGURES

Embodiments of the invention will now be described by way of example only with reference to the figures, in which:
Figure 1 shows an X-ray spectrum of a Tungsten anode X-ray tube (Source: https://www.ncbi.nlm.nih.gov/books/NBK546155/pdf/Bookshelf_NBK546155.pdf );
Figure 2 shows change in a spectral emissions of a Tungsten anode X-ray tube as a function of accelerator voltage. The dotted lines identify the trend line of the Bremsstrahlung X-ray emissions in the absence of any X-ray absorption filtering effect of X-ray tube window or the anode material itself, etc. (Source: https://ccah.vetmed.ucdavis.edu/sites/g/files/dgvnsk4586/files/local_resources/p dfs/rad-onc-matney-production-of-x-ray.pdf);
Figure 3 shows source of the K-Shell Characteristic X-rays of an X-ray tube (above) (Source: https://ccah.vetmed.ucdavis.edu/sites/g/files/dgvnsk4586/files/local_resources/p dfs/rad-onc-matney-production-of-x-ray.pdf); and
   efficiency of X-ray production - most of the electron beam energy becomes heat so beneficial to use high atomic number target like tungsten from the prospective of X-ray generation efficiency (below);
Figure 4 shows a schematic of an apparatus according to an exemplary embodiment;
Figure 5 shows a schematic of an apparatus according to an exemplary embodiment; and

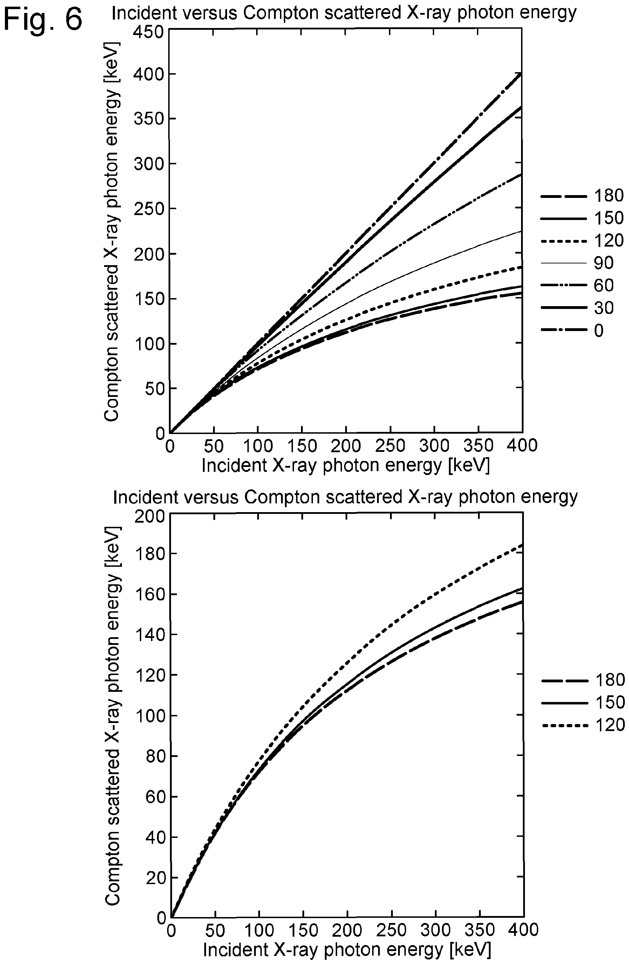

Figure 6 shows the relationship between incident X-ray photon energies and Compton backscattered X-ray photon energies as a function of the backscatter angle θ;
Figure 7 shows the intensity of scattered X-ray photon distribution as a function of its scattering angle for different energies (Source: https://www.researchgate.net/publication/325255903 Caracterisation numeriqu e de la technique de spectrometrie gamma par simulation Monte-Carlo Application a la datation d%27echantillons envrionnementaux/fiqures? lo=1): and
Figure 8 shows a method according to an exemplary embodiment.

### DETAILED DESCRIPTION

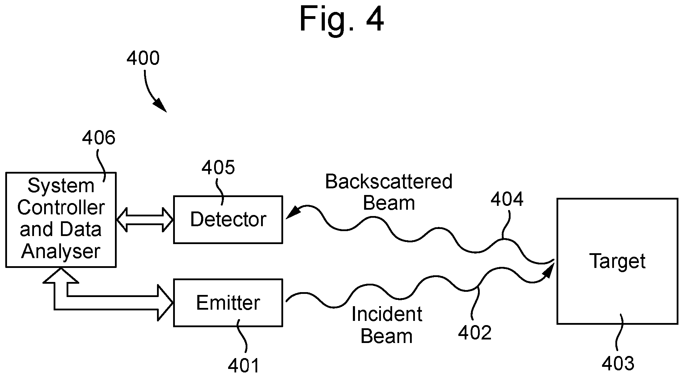

Figure 4 shows a schematic of an apparatus 400 according to an exemplary embodiment. The apparatus 400 comprises:
an emitter 401 configured to emit X-ray radiation 402 incident upon a target 403;
a detector 405 configured to detect backscattered radiation 404 from the target 403; and
a computer 406, comprising a processor and a memory, communicatively coupled to the detector 405, wherein the computer 406 is configured to classify a composition of the target 403 based on the detected backscattered radiation 404.

In this example, the apparatus 400 is a materials classifier as described with respect to the materials classifier in WO 2021/032951 A1 mutatis mutandis (i.e. having an emitter 401 configured to emit X-ray radiation 402 c.f. a gamma radiation source).

In this example, the emitter 401 is configured to emit substantially and/or primarily Bremsstrahlung radiation.

In this example, the emitter 401 comprises and/or is an X-ray tube.

In this example, the emitter 401 is configured to emit X-ray radiation 402 having an energy in a range from 60 keV to 400 keV, preferably in a range from 100 keV to 300 keV.

In this example, the computer 406 is configured to vary the voltage output of the emitter 401, for example depending on a use case scenario.

In this example, the emitter 401 is configured to emit X-ray radiation 402 responsive to initiation thereof by an operator, for example via an actuator, such as a physical actuator or a software actuator e.g. a GUI button.

In this example, the detector 405 comprises and/or is a spectroscopic detector 405, such as a scintillator detector 405.

In this example, the detector 405 is configured to detect backscattered Compton radiation, for example as described herein.

In this example, the detector 405 is configured to detect an intensity and/or an energy of the backscattered radiation 404, for example as described herein. In this way, an energy spectrum of the backscattered radiation 404 may be provided.

In this example, the detector 405 and the emitter 401 are quasi-collocated or collocated, for example mutually adjacent or closely-spaced.

In this example, the detector 405 and the emitter 401 are disposed in a fixed-spaced relationship.

In this example, the detector 405 is configured to detect backscattered radiation 404, having an energy in a range from 10 keV to 160 keV, preferably in a range from 50 keV to 160 keV.

In this example, the detector 405 is configured to detect backscattered radiation 404 events, the events lying in at least three different detected energy bands.

In this example, the detector 405 is as described in WO 2021/032951 A1 mutatis mutandis.

In this example, the computer 406 is communicatively coupled to the emitter 401 and the computer 406 is configured to control an intensity and/or an energy of the emitted X-ray radiation 402.

In this example, the computer 406 is communicatively coupled to the emitter 401 and the computer 406 is configured to ramp an intensity and/or an energy of the emitted X-ray radiation 402. In this example, the computer 406 is configured to ramp an intensity and/or an energy of the emitted X-ray radiation 402 to perform a scan of the target 403 comprising acquiring a series of backscattered radiation 404 energy spectra as a function of intensity and/or energy of the emitted X-ray radiation 402 and classify the composition of the target 403 based on the detected backscattered radiation 404 for the series of backscattered radiation 404 energy spectra as a function of intensity and/or energy of the emitted X-ray radiation 402. In this example, the computer 406 is configured to ramp an intensity and/or an energy of the emitted X-ray radiation 402 to perform a survey scan of the target 403 comprising acquiring a series of backscattered radiation 404 energy spectra as a function of intensity and/or energy of the emitted X-ray radiation 402, select an intensity and/or energy of the emitted X-ray radiation 402 from the series of backscattered radiation 404 energy spectra as a function of intensity and/or energy of the emitted X-ray radiation 402, control the control the intensity and/or the energy of the emitted X-ray radiation 402 to be the selected intensity and/or energy of the emitted X-ray radiation 402 and classify the composition of the target 403 based on the detected backscattered radiation 404 for the selected intensity and/or energy of the emitted X-ray radiation 402.

In this example, the computer 406 is configured to control the intensity and/or the energy of the emitted X-ray radiation 402 using feedback from the detected signal as a means of optimising the detected signal.

In this example, the computer 406 is configured to modulate the intensity and/or the energy of the emitted X-ray radiation 402.

In this example, the computer 406 is configured to classify the composition of the target 403 based on the detected backscattered radiation 404 and the modulated intensity and/or energy of the emitted X-ray radiation 402.

In this example, the computer 406 is configured to classify the composition of the target 403 based on background-subtracted, detected backscattered radiation 404.

In this example, the computer 406 is configured to generate an image of the target 403 based on the detected backscattered radiation 404 and/or the classified composition of the target 403.

In this example, the computer 406 is configured to classify the composition of the target 403 based on the detected backscattered radiation 404 by selecting two or more sections of the detected backscattered radiation 404 (i.e. detected energy spectrum).

In this example, the computer 406 is configured to compare (and optionally match) the energy spectrum of the target 403 with the respective energy spectrum of another target 403 area, for example included in a database or library.

In this example, the computer 406 is configured to analyse two or more relationships between detected backscattered radiation 404 events in at least three different detected energy bands, the analysis being carried out for at least two different materials or material types, the computer 406 being configured to select a preferred relationship for distinguishing between the at least two different materials or material types.

In this example, the computer 406 is configured to compare values for detected events lying in respective ones of the at least three energy bands. The values may comprise the number of detected events lying in the respective energy bands.

In this example, the computer 406 is configured to provide a multidimensional plotter for plotting relationships between detected events for different materials or material types, in relation to axes which each represent values arising in a respective energy band. In this example, the computer 406 is configured to select a preferred relationship for distinguishing between the at least two different materials or material types.

In this example, the computer 406 is as described with respect to the classifying analyser in WO 2021/032951 A1 mutatis mutandis.

The emitter 401 is a source of X-ray radiation 402. The properties of X-ray radiation 402, as used in typical applications, is that it comprises a broad emission spectrum of what is referred to a Bremsstrahlung (or 'breaking radiation') in addition to one or more narrow emission lines that are characteristic of the 'target 403' material used in the emitter 401. The apparatus 400 requires energy or energies at one or more component photon energies, such that the emitter 401 is generating X-ray radiation 402 that strikes the material under interrogation, potentially after transmitting through any container materials. The X-ray radiation 402 interacts with the material under interrogation in such a way that the material under interrogation selectively absorbs (photo-ionisation) or scatters (Compton scattering, or Rayleigh scattering) the incident radiation, in a way that is characteristically dependent on the composition of the material under interrogation.

The detector 405 may be collocated or separate from the emitter 401. The detector 405 should be able to detect the x-rays scattered from the target 403 material, again potentially after transmitting a container material. The detector 405 should be able to detect the energy or energies of the scattered x-ray photons. The more efficient method is to collocate the detector 405 alongside the emitter 401 i.e. side by side, or alternatively with the detector 405 slightly behind the emitter 401. The aim is to prevent direct transmission of the X-rays from the emitter to the detector 405 in so far is possible using a realistic thickness of shielding material (e.g. lead or tungsten or perhaps a tungsten-copper alloy (tungsten rich), etc. This results in the lowest dispersion in backscatter energy for a fractional change in backscatter angle. This also results in the largest difference in photon energy between the incident and scattered photons.

The processor monitors the signals returned by the detector 405 and processes the returned signal by selecting two or more sections of the detected signal spectrum. This spectrum can be interrogated by an algorithm such as that described in WO 2021/032951 A1 mutatis mutandis, which selects two or more sections of the spectrum to characterise a feature set that is descriptive of the subject material.

Comparison of the feature sets with known feature sets of types of materials enables the subject material to be classified.

Additionally and/or alternatively, the apparatus 400 may record the spectrum of a target 403 and compare this spectrum to another target 403 area. One can consider an example of how this could work by considering holding the apparatus 400 and directing it towards a wall, with the expectation that behind one part of the wall there is a target 403 of interest. As one moves the system along a wall whilst operating it, the spectrum will change when an object concealed behind one part of the wall gets illuminated. This change in the spectral characteristic may be noted, for example, by an audible alarm.

The source intensity may be fixed. It may also be controlled by the operator which may allow the operator to select the intensity depending on the nature of the subject material being investigated. The intensity control may also be controlled by the processor using feedback from the returned (detected) signal as a means of optimising the returned signal.

Figure 5 shows a schematic of an apparatus 500 according to an exemplary embodiment. The apparatus 500 is generally as described with respect to the apparatus 400, description of which is not repeated for brevity. Like reference signs denote like features. The apparatus 500 comprises:
an emitter 501 configured to emit X-ray radiation 502 incident upon a target 503;
a detector 505 configured to detect backscattered radiation 504 from the target 503; and
a computer 506, comprising a processor and a memory, communicatively coupled to the detector 505, wherein the computer 506 is configured to classify a composition of the target 503 based on the detected backscattered radiation 504.

In this example, the apparatus 500 comprises a range finder 507 configured to measure a spacing between the emitter 501 and the target 503. In this way, the spacing or distance between the emitter 501 and the target 503 may be measured. This may, for example, be achieved using a laser or acoustic rangefinder. The measuring range finder 507 may run in parallel to the emit X-ray radiation 502, or, using a series of mirrors 509A, 509B, run coaxially with the beam, as shown in Figure 5.

By measuring the distance to the target 503, the following advantages may be provided:
1. The spacing may be used for safety, to only permit the emitter 501 to operate when a target 503 is within a specified range. If no target 503 is present within this range, then the emitter 501 will be controlled, for example by the computer 506, to not emit X-rays; and
2. The spacing may be used to aid the computation of the angle of backscatter between the emitter 501 and detector 505. The angle of backscatter enables the calculation of the photon energy difference between the incident X-ray radiation and the backscattered radiation. Understanding this difference may enable the computer 506 to subtract from the received signal the radiation scattered from the closest surface of the target 503. This may for example be a plasterboard wall, or the outer casing of a suitcase. See Figure 5.

In this example, the computer 506 is communicatively coupled to the range finder 507 and the computer 506 is configured to control an intensity and/or energy of the emitted X-ray radiation 502 based on the measured spacing and/or the computer 506 is configured to classify the composition of the target 503 based on the detected backscattered radiation 504 and the measured spacing.

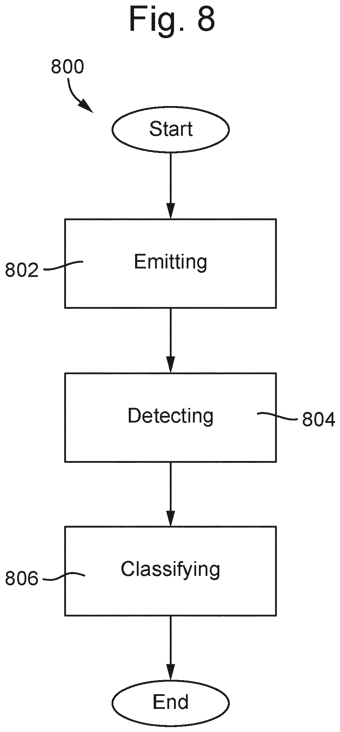

Figure 8 shows a method 800 according to an exemplary embodiment. The method 800 is of classifying a composition of a target, the method comprising:
emitting 802 X-ray radiation incident upon the target;
detecting 804 backscattered radiation from the target; and
classifying 806, using a computer comprising a processor and a memory, the composition of the target based on the detected backscattered radiation.

## Claims

1. An apparatus (400, 500) comprising:
an emitter (401, 501) configured to emit X-ray radiation (402, 502) incident upon a target (403, 503);
a detector (405, 505) configured to detect backscattered radiation (404, 504) from the target (403, 503); and
a computer (406, 506), comprising a processor and a memory, communicatively coupled to the detector (405, 505), wherein the computer (406, 506) is configured to classify a composition of the target (403, 503) based on the detected backscattered radiation (404, 504).

2. The apparatus according to claim 1, wherein the computer (406, 506) is communicatively coupled to the emitter (401, 501) and wherein the computer (406, 506) is configured to control an intensity and/or an energy of the emitted X-ray radiation (402, 502).

3. The apparatus according to claim 2, wherein the computer (406, 506) is configured to modulate the intensity and/or the energy of the emitted X-ray radiation (402, 502).

4. The apparatus according to claim 3, wherein the computer (406, 506) is configured to classify the composition of the target (403, 503) based on the detected backscattered radiation (404, 504) and the modulated intensity and/or energy of the emitted X-ray radiation (402, 502).

5. The apparatus according to any one of the preceding claims, wherein the emitter (401, 501) is configured to emit substantially Bremsstrahlung radiation.

6. The apparatus according to any one of the preceding claims, wherein the emitter (401, 501) is configurable to emit characteristic radiation.

7. The apparatus according to any one of the preceding claims, wherein the emitter (401, 501) comprises a filter configured to limit an energy spectrum of the of the emitted X-ray radiation (402, 502).

8. The apparatus according to any one of the preceding claims, wherein the detector (405, 505) is configured to detect backscattered Compton radiation.

9. The apparatus according to any one of the preceding claims, wherein the detector (405, 505) is configured to detect an intensity and/or an energy of the backscattered radiation (404, 504).

10. The apparatus according to any one of the preceding claims, wherein the detector (405, 505) and the emitter (401, 501) are quasi-collocated or collocated.

11. The apparatus according to any one of the preceding claims, comprising a range finder (507) configured to measure a spacing between the emitter (501) and the target (503).

12. The apparatus according to claim 11, wherein the computer (506) is communicatively coupled to the range finder (507) and wherein the computer (506) is configured to control an intensity and/or energy of the emitted X-ray radiation (502) based on the measured spacing and/or wherein the computer (506) is configured to classify the composition of the target (503) based on the detected backscattered radiation (504) and the measured spacing.

13. The apparatus according to any one of the preceding claims, wherein the computer (406, 506) is configured to classify the composition of the target (403, 503) based on background-subtracted, detected backscattered radiation (404, 504).

14. The apparatus according to any one of the preceding claims, wherein the computer (406, 506) is configured to generate an image of the target (403, 503) based on the detected backscattered radiation (404, 504) and/or the classified composition of the target (403, 503).

15. A method (800) of classifying a composition of a target, the method (800) comprising:
emitting (802) X-ray radiation incident upon the target;
detecting (804) backscattered radiation from the target; and
classifying (806), using a computer comprising a processor and a memory,
the composition of the target based on the detected backscattered radiation.
